# FASCICULE DE BREVET EUROPEEN

(11) **EP 3 636 473 B1**
(45) Date de publication et mention de la délivrance du brevet: **29.11.2023**
(21) Numéro de dépôt: 19201787.9
(22) Date de dépôt: 07.10.2019
(51) Int. Cl.: B60J 5/06, B05B 13/02

(54) **CAISSE DE VÉHICULE AUTOMOBILE ÉQUIPÉE TEMPORAIREMENT D'UNE PORTIÈRE LATÉRALE**
KAROSSERIE EINES KRAFTFAHRZEUGS, DIE VORRÜBERGEHEND MIT EINER SEITENTÜR AUSGESTATTET IST
BODY OF A MOTOR VEHICLE TEMPORARILY PROVIDED WITH A SIDE DOOR

(30) Priorité: 08.10.2018 FR 1859312
(43) Date de publication de la demande: 15.04.2020
(73) Titulaire: COUTIER INDUSTRIE, 57970 Basse-Ham (FR)
(72) Inventeur: COUTIER, Charles, 57970 BASSE HAM (FR); PELSER, Christian, 57970 BASSE HAM (FR)
(74) Mandataire: Lavialle, Bruno François Stéphane

(56) Documents cités:
- FR-A1- 2 885 636
- FR-A1- 2 997 145
- FR-B1- 2 885 636
- US-A1- 2009 288 596

## Description

La présente invention concerne une caisse d'un véhicule automobile équipée, de manière temporaire, d'une portière latérale qui sera coulissante dans le véhicule achevé.

### ARRIERE PLAN DE L'INVENTION

Pour le traitement des caisses de véhicule (protection anticorrosion, peinture, mise en place d'équipements sur la caisse du véhicule), on équipe ces dernières de leurs portières, par l'intermédiaire de fausses charnières ou charnières provisoires qui permettent d'écarter les portières de la caisse ou de les en rapprocher, afin d'obtenir une cohérence de traitement tant pour l'anticorrosion que, et surtout, pour la peinture.

L'usage de fausses charnières est connu. On se référera par exemple au document FR 2.997.145 qui illustre un mode de réalisation de ce type d'organes.

La demande des constructeurs automobiles à ce propos est que la portière, lorsqu'elle est rabattue, soit sensiblement parallèle à la surface extérieure de la caisse et éloignée de celle-ci et qu'elle soit en débord vers l'arrière par rapport à l'ouverture de la caisse pour l'écarter longitudinalement du pied latéral (montant latéral central de la carrosserie) afin d'éviter le contact de la portière et la carrosserie et de loger la ou les fausses charnières. Il existe alors un recouvrement de la caisse par le bord arrière de la porte. Cette position rabattue est la position naturelle de la portière au cours du traitement soit parce que la caisse est parfois inclinée sur la chaîne qui la transporte d'un poste de traitement à l'autre, soit parce que l'axe d'articulation de la portière sur la caisse est volontairement incliné pour obtenir cet effet.

Il est par ailleurs connu du document US-A-2009/0288596 des fausses charnières présentant une structure articulée complexe incorporant des jeux de bielles.

### OBJET DE L'INVENTION

Il est impératif que le rabattement de la portière sur la caisse n'aille pas jusqu'au contact avec la caisse pour éviter la création d'un défaut notamment au cours de la phase de peinture.

### RESUME DE L'INVENTION

La présente invention entend garantir ce résultat par des moyens simples qui sont parties intégrantes des charnières provisoires de sorte qu'il n'est pas besoin d'installer, de mettre en oeuvre et de retirer des moyens séparés. On élimine de ce fait toute une série de manipulations pour un opérateur qui ont une incidence sur le coût du traitement. En outre, dans le cas d'une mise en place robotisée des portières sur la caisse, l'absence de ces opérations complémentaires est une grande simplification de l'action robotisée.

A cet effet, l'invention a pour objet une caisse de véhicule automobile selon la revendication 1.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 est un schéma du montage de portière sur une caisse selon l'art antérieur
- la figure 2 illustre par un schéma également la disposition de l'invention qui comporte un verrou élastique,
- la figure 3 illustre de la même manière une variante des moyens selon l'invention pouvant assurer ce verrouillage élastique,
- la figure 4 illustre un cas particulier des moyens de la figure 3.

### DESCRIPTION DETAILLEE DE L'INVENTION

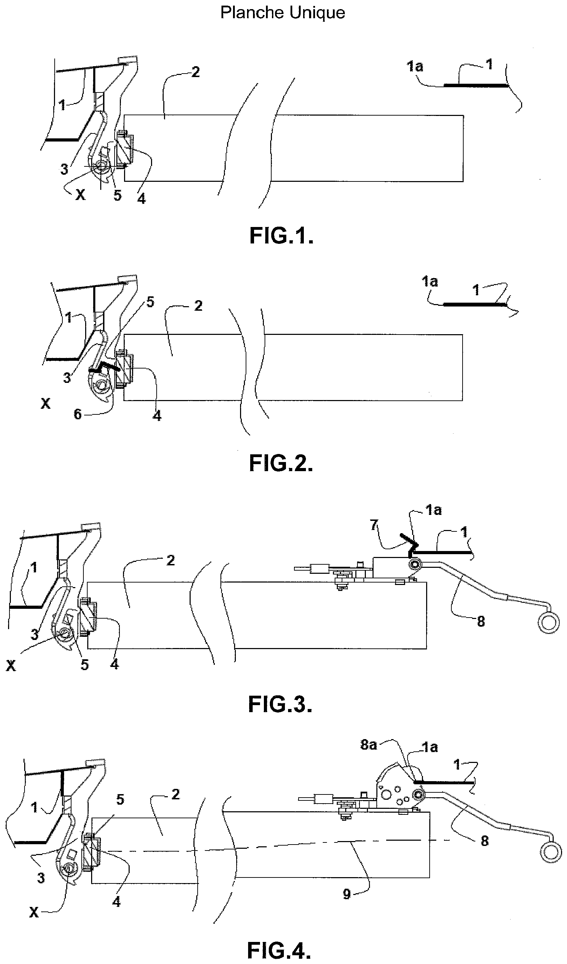

Le schéma de la figure 1 représente une caisse de véhicule 1 avec une ouverture dont le bord arrière est noté 1a. Une portière latérale 2 est portée provisoirement par des éléments d'articulation 3 et 4 qui sont des paumelles semblables à celles décrites dans le document FR3062870. Le montage articulé est réalisé par deux paires de paumelles, une haute et une basse, qui définissent un axe X d'articulation, sensiblement perpendiculaire au plan du dessin mais légèrement incliné de sorte que la porte 2, lorsque la caisse 1 est horizontale, tend à se tenir dans son état de fermeture de l'ouverture de la caisse.

Selon l'invention ces paumelles peuvent buter l'une sur l'autre, par exemple par un bossage 5, lorsque la portière est dans son état de fermeture comme représenté. Cette butée est avantageuse au sens où elle empêche la portière de venir talonner sur la caisse au voisinage du bord 1a de l'ouverture. On évite ainsi le contact entre la portière et la caisse, ce qui supprime les risques de marquage de la caisse notamment après la phase de peinture. On rappellera à ce propos que ce contact est à prohiber du fait de l'extension de la portière (articulée de manière provisoire à la caisse) au-delà du bord 1a de l'ouverture, ce qui n'était pas le cas dans les montages antérieurs.

La variante représentée à la figure 2 comporte un élément de verrouillage élastique 6 (ici représenté schématiquement) qui est porté par l'une des paumelles et s'encliquette derrière un élément de l'autre paumelle de manière à opposer une force de retenue limitée et aisée à vaincre, par exemple par un opérateur ou un robot, de la portière dans son état de fermeture. La réalisation pratique des moyens assurant cette fonction d'encliquetage entre les deux paumelles peut prendre des formes multiples à la portée de l'homme du métier.

Dans la variante représentée à la figure 3, l'encliquetage élastique est réalisé entre la portière 2 et le bord 1a de la caisse par également un cliquet élastique 7. Selon l'invention, ce cliquet est porté par une poignée de manoeuvre 8 de la portière qui est rapportée sur celle-ci de manière démontable. Cette poignée est connue en elle-même. Rapporter le cliquet sur cette poignée permet de supprimer l'opération qui consiste à le rapporter directement sur la portière en plus de la fixation de la poignée.

Enfin à la figure 4, on retrouve la plupart des éléments décrits précédemment avec les mêmes références. Dans ce cas, la poignée 8 comporte une sorte de pêne 8a engagé derrière le bord 1a de l'ouverture de la caisse 1 lorsqu'on applique la portière 2 vers son état de fermeture sous une force suffisante pour qu'elle se déforme élastiquement (comme illustré par la ligne 9 du dessin qui est une représentation schématique de la ligne « neutre » de la portière légèrement déformée élastiquement, le cliquet étant engagé). Le maintien sans jeu de la portière dans son état de fermeture est alors assuré dans cette variante de réalisation sans autres pièces que celles déjà connues de l'homme de métier à l'exception des moyens de butée 5.

## Revendications

1. Caisse (1) de véhicule automobile comportant une ouverture équipée d'une portière (2) latérale, normalement coulissante, articulée de manière temporaire à la caisse autour d'un axe (X) au moyen d'un dispositif qui comprend au moins une charnière (3, 4) d'articulation temporaire de la portière sur un bord de l'ouverture de la caisse pour permettre un mouvement angulaire de cette portière par rapport à la caisse entre au moins un état écarté de la caisse et un état rabattu vers la caisse, comportant une première pièce ou paumelle (3) pourvue d'un premier élément d'articulation, comme un gond ou un charnon, et d'une platine ou penture de fixation écartée de ce premier élément et une deuxième pièce ou paumelle (4) pourvue d'un second élément d'articulation, comme un charnon ou un gond, apte à coiffer ou être coiffé par le premier et d'une platine ou penture de fixation écartée de ce moyen, chaque pièce comportant des moyens (5) en correspondance tels que lorsque la charnière est dans son état rabattu, ces moyens sont en butée l'un sur l'autre et limitent la rotation relative des deux pièces dans la poursuite du rabattement de la portière (2) de telle manière que la portière dans l'état rabattu ne vienne pas talonner contre la caisse à l'opposé du dispositif d' articulation, **caractérisée en ce que** la portière est munie d'une poignée (8) pour sa manœuvre manuelle autour de l'articulation, la poignée (8) portant un pêne (8a) de retenue de la portière en position de fermeture, engagé derrière un bord de l'ouverture de la caisse proche de cette poignée lorsqu'on applique la portière (2) vers son état de fermeture sous une force suffisante pour qu'elle se déforme élastiquement.

2. Caisse de véhicule automobile selon la revendication 1, **caractérisé en ce que** les pièces (3, 4) comportent des moyens (6) de leur encliquetage élastique mutuel dans l'état rabattu de la portière (2).

## Patentansprüche

1. Karosserie (1) eines Kraftfahrzeugs, umfassend eine Öffnung, die mit einer Seitentür (2), üblicherweise einer Schiebetür, ausgestattet ist, die temporär an der Karosserie um eine Achse (X) mittels einer Vorrichtung angelenkt ist, die mindestens ein Scharnier (3, 4) zur temporären Gelenkverbindung der Tür an einem Rand der Öffnung der Karossiere umfasst, um eine Winkelbewegung dieser Tür in Bezug auf die Karosserie zwischen mindestens einem von der Karosserie beabstandeten Zustand und einem zur Karosserie geklappten Zustand zu ermöglichen, umfassend ein erstes Teil oder Türband (3), das mit einem ersten Gelenkverbindungselement, wie eine Türangel oder eine Scharnierhälfte, und einer Befestigungsplatte oder einem Befestigungsband versehen ist, die bzw. das von diesem ersten Element beabstandet ist, sowie ein zweites Teil oder Türband (4), das mit einem zweiten Gelenkverbindungselement, wie eine Türangel oder eine Scharnierhälfte, versehen ist, das geeignet ist, das erste abzudecken oder von dem ersten abgedeckt zu werden, sowie mit einer Befestigungsplatte oder einem Befestigungsband, die bzw. das von diesem Mittel beabstandet ist, wobei jedes Teil Korrespondenzmittel (5) umfasst, sodass, wenn das Scharnier in seinem geklappten Zustand ist, diese Mittel in Anschlag aneinander sind und die relative Drehung der beiden Teile beim weiteren Klappen der Tür (2) begrenzen, derart, dass die Tür in dem geklappten Zustand nicht gegen die Karosserie auf der entgegengesetzten Seite der Gelenkverbindungsvorrichtung stößt, **dadurch gekennzeichnet, dass** die Tür mit einem Griff (8) für ihre manuelle Betätigung um die Gelenkverbindung versehen ist, wobei der Griff (8) einen Halteriegel (8a) zum Halten der Tür in Schließposition trägt, der hinter einen Rand der Öffnung der Karosserie nahe dieses Griffs greift, wenn die Tür (2) in ihren Schließzustand gebracht wird, unter einer Kraft, die ausreicht, damit sie sich elastisch verformt.

2. Karosserie eines Kraftfahrzeugs nach Anspruch 1, **dadurch gekennzeichnet, dass** die Teile (3, 4) Mittel (6) für ihr gegenseitiges elastisches Einrasten in den geklappten Zustand der Tür (2) umfassen.

## Claims

1. Body (1) of a motor vehicle including an opening equipped with a normally sliding side door (2) temporarily articulated to the body about an axis (X) by means of a device which comprises at least one hinge (3, 4) for temporary articulation of the door on one edge of the opening of the body to allow angular movement of said door relative to the body between at least one state spaced from the body and a state closer to the body, including a first part or hinge member (3) provided with a first articulation element, such as a hinge pin or a knuckle, and a fixing plate or band spaced from said first element and a second part or hinge member (4) provided with a second articulation element, such as a knuckle or a hinge pin, capable of covering or being covered by the first and with a fixing plate or band spaced from said means, each part including corresponding means (5) such that when the hinge is in its state closer to the body said means abut one on the other and limit relative rotation of the two parts on continuing movement of the door (2) closer to the body in such a way that the door in the state closer to the body does not strike the body opposite the articulation device, **characterized in that** the door is provided with a handle (8) for manoeuvering it manually about the articulation, the handle (8) carrying a bolt (Sa) for retaining the door in the closed position, engaged behind an edge of the opening of the body close to said handle when the door (2) is pushed towards its closed position by a force sufficient for it to deform elastically.

2. Motor vehicle body according to claim 1, **characterized in that** the parts (3, 4) include means (6) for their mutual elastic locking in the state of the door (2) closer to the body.
